# FASCICULE DE BREVET EUROPEEN

(11) **EP 0 477 093 B1**
(45) Date de publication et mention de la délivrance du brevet: **30.06.1993**
(21) Numéro de dépôt: 91402478.1
(22) Date de dépôt: 18.09.1991
(51) Int. Cl.: C04B 35/80, C04B 35/58, B23C 5/18, C04B 37/00, C04B 35/10

(54) **Outil de fraisage à corps et tête d'usinage réalisés en des matériaux différents et procédé de réalisation**
Fräswerkzeug mit Schaft und Kopf hergestellt aus verschiedenen Materialien und Verfahren zur Herstellung
Milling cutter tool with body and head made out of different materials and method of making

(30) Priorité: 20.09.1990 FR 9011598
(43) Date de publication de la demande: 25.03.1992
(73) Titulaire: SOCIETE NATIONALE D'ETUDE ET DE CONSTRUCTION DE MOTEURS D'AVIATION, "S.N.E.C.M.A.", F-75724 Paris Cédex 15 (FR)
(72) Inventeur: Pinto, Eric Christian Jean, F-77930 Fleury en Biere (FR); Vigneau, Joel Olivier Abel, F-91750 Champcueil (FR)
(74) Mandataire: Moinat, François

(56) Documents cités:
- DE-A- 3 703 900
- FR-E- 75 980
- GB-A- 1 161 969
- US-A- 4 543 345

## Description

On connaît déjà des outils de fraisage comprenant un corps d'outil distinct de la tête d'usinage. FR-A-2 613 648 représente un tel outil.

Dans le but d'obtenir une durée de vie satisfaisante de l'outil, et un prix de revient modéré, l'invention propose de choisir judicieusement les matériaux constitutifs de la tête d'usinage et du corps d'outil pour réaliser, d'une part, une tête d'usinage, et donc un outil ayant un excellent rendement d'usinage, d'autre part, un corps d'outil peu fragile et d'appliquer un procédé de réalisation satisfaisant ces conditions.

Il est connu par DE-A 3703900 d'obtenir un outil de coupe comportant une liaison mécanique par emboîtage entre une tête d'usinage et un corps d'outil-support en des matériaux différents, un brasage entre les deux parties pouvant être effectué.

Il est en outre connu en soi par US-A-4543345 un matériau composite céramique comportant des éléments filamentaires monocristallins de renforcement dans une matrice et ayant une orientation préférentielle unidirectionnelle.

A cet effet, la tête d'usinage formant une partie d'extrémité de l'outil est réalisée en une céramique et est rapportée sur ledit corps d'outil, lui-même réalisé en un matériau ayant une résilience supérieure à celle de ladite céramique, tel qu'un acier à outil ou un carbure de tungstène, les deux parties d'outil, corps d'outil et tête d'usinage ayant chacune une forme générale cylindrique et étant uniquement liées par brasage suivant un joint plan ininterrompu.

Les avantageuses dispositions suivantes sont, en outre, de préférence adoptées :
- la céramique est composite comprenant une matrice et des éléments filamentaires de renforcement et les éléments filamentaires de renforcement ont des orientations qui sont principalement contenues dans des plans perpendiculaires à un axe longitudinal que comporte le corps de l'outil.
   Le procédé de réalisation dudit outil de fraisage comporte les étapes suivantes :
   a) une partie d'extrémité cylindrique destinée à constituer la tête d'usinage, en matériau céramique composite est rapportée sur un corps d'outil cylindrique en carbure de tungstène par brasage selon les indications suivantes :
- le joint est une surface plane non interrompue,
- la brasure utilisée est conformée en un feuillard d'environ 0,05 mm d'épaisseur, comprenant les pourcentages pondéraux de sensiblement 63% d'argent ; 35,25% de cuivre, 1,75% de titane, et le brasage proprement dit est réalisé sous vide, à 880°C pendant sensiblement 15 minutes.

L'avantage principal d'un outil obtenu conforme à l'invention réside dans la réalisation de la tête de fraisage dans le meilleur matériau connu pour ce faire, mais relativement coûteux et fragile, et en limitant l'utilisation de ce matériau à la seule tête de fraisage et en choisissant un matériau moins cher et moins fragile pour réaliser le corps d'outil, en optimisant la réalisation globale de l'outil.
L'invention sera mieux comprise et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.
Il sera fait référence aux dessins annexés, dans lesquels :

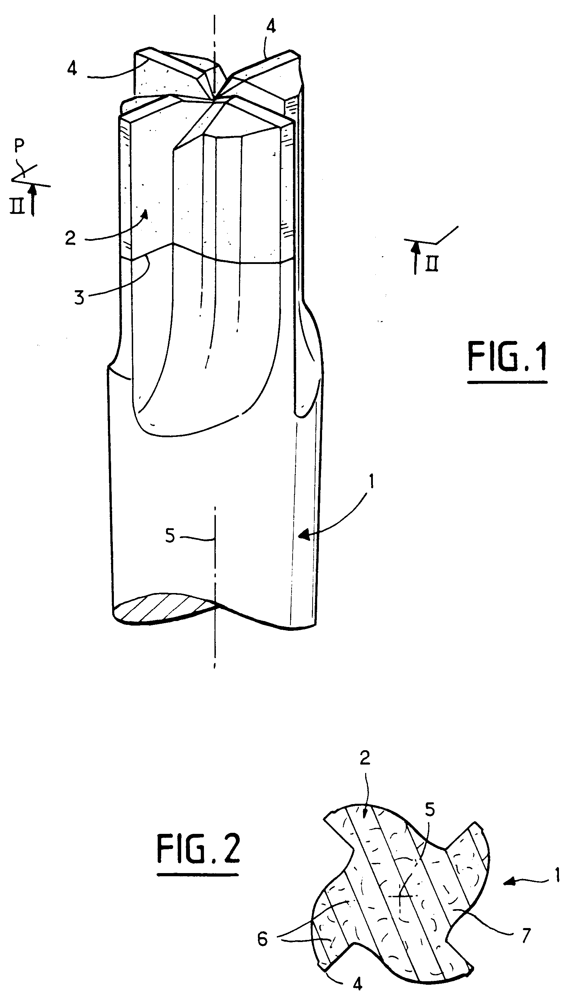

- la figure 1 est une vue en perspective d'un outil de fraisage réalisé conforme à l'invention ; et,
- la figure 2 est une coupe, par le plan P de la figure 1, de la tête de fraisage dudit outil.

L'outil de fraisage représenté sur les figures comprend :
- un corps d'outil 1, cylindrique présentant un axe longitudinal 5 ; et,
- une tête d'usinage 2, qui est fixée à une extrémité du corps d'outil 1 par brasage 3, et qui porte les arêtes d'usinage 4.

La tête d'usinage et le corps d'outil sont initialement tous deux cylindriques. La tête d'usinage et l'extrémité du corps d'outil sont usinées ensemble, après réalisation du brasage.

Une coupe de la tête d'usinage par un plan P perpendiculaire à l'axe 5 (figure 2) montre la présence de nombreuses trichites (en anglais "Whiskers") 6, qui sont des monocristaux filiformes, ayant un diamètre de l'ordre de 0,001 millimètre.

Selon l'invention une telle coupe contient des éléments filamentaires, tels que des fibres de 0,01 millimètre de diamètre, ou encore lesdites trichites.

Le choix des matériaux est important.

Le corps d'outil 1 est réalisé en un matériau possédant une bonne résilience, en tout cas moins fragile que la tête d'usinage 2. Le carbure de tungstène, ainsi que les aciers à outil conviennent à la réalisation du corps d'outil 1.

La tête d'usinage est réalisée en un matériau céramique, constituant une matrice 7, dans laquelle sont noyés les éléments filamentaires ou les trichites 6. Les pourcentages préférés sont les suivants :
- la matrice occupe 60 à 85 %, en volume, de la tête d'usinage ; et
- les éléments filamentaires ou les trichites occupent le reste du volume, soit de 40 à 15 %.

Une composition performante consiste à réaliser la matrice en alumine, pour environ 70 % du volume de la tête d'usinage, et à réaliser les trichites en carbure de silicium pour le resta du volume, soit environ 30 %.

En variante, la matrice peut être réalisée en nitrure de silicium ou en alumine et contenir des éléments filamentaires, éventuellement sous la forme de trichites, eux-mêmes réalisés en carbure de silicium ou en alumine.

Le brasage 3 de fixation de la tête d'usinage 2 sur l'extrémité du corps d'outil 1 est un élément qui coopère à la bonne tenue générale de l'outil en service.

Le brasage suivant a été trouvé et adopté pour la qualité obtenue de la fixation :
- la brasure utilisée provient d'un feuillard d'environ 0,05 millimètre d'épaisseur ;
- la composition du feuillard est celle comprenant les pourcentages pondéraux d'environ 63% d'argent ; 35,25 % de cuivre; 1,75 % de titane ;
- enfin, le brasage est réalisé sous vide, dans un four maintenant la température à approximativement 880°C, pendant environ 15 minutes.

Des outils de fraisage, réalisés conformément aux indications qui précédent, permettent de n'utiliser la céramique que là où sa présence est primordiale, dans la constitution de la tête d'usinage 2, et apporte une efficacité qui ne serait pas obtenue autrement, tout en étant peu fragile du fait du choix du matériau du corps d'outil 1. La présence des trichites 6 ; le choix de leurs orientations préférées, perpendiculairement à l'axe 5 ; ainsi que le pourcentage choisi pour leur composition concourent tous à la réalisation optimale de la tête d'usinage.

Un outil, tel que celui qui vient d'être décrit, permet des fraisages à vitesses élevées, ce qui est précieux pour l'usinage de pièces en matériaux composites ou réalisées en certains superalliages.

## Revendications

1. Procédé de réalisation d'un outil de fraisage comprenant un corps d'outil distinct de la tête d'usinage caractérisé en ce qu'il comporte les étapes suivantes :
a) une partie d'extrémité cylindrique destinée à constituer la tête d'usinage (2), en un matériau céramique composite comprenant une matrice (7) et des éléments filamentaires de renforcement (6) et les éléments filamentaires de renforcement (6) ayant des orientations qui sont principalement contenues dans des plans (P) perpendiculaires à un axe longitudinal (5) que comporte le corps de l'outil (1), est rapportée sur un corps d'outil (1) cylindrique en carbure de tungstène par brasage selon les indications suivantes :
- le joint est une surface plane non interrompue,
- la brasure utilisée est conformée en un feuillard d'environ 0,05 mm d'épaisseur, comprenant les pourcentages pondéraux de sensiblement 63% d'argent ; 35,25% de cuivre, 1,75% de titane, et le brasage proprement dit est réalisé sous vide, à 880°C pendant sensiblement 15 minutes;
b) la tête d'usinage (2) et l'extrémité du corps d'outil (1) sont usinées ensemble pour le taillage des arêtes de coupe de l'outil et des surfaces d'outil associées.

## Patentansprüche

1. Verfahren zur Herstellung eines Fräswerkzeugs, das einen von dem Bearbeitungskopf getrennten Werkzeugschaft besitzt,
**gekennzeichnet durch** folgende Verfahrensschritte:
a) ein zur Bildung des Bearbeitungskopfes (2) bestimmtes zylindrisches Endstück aus einem keramischen Verbundwerkstoff, bestehend aus einer Matrix (7) und faserförmigen Verstärkungselementen (6), die hauptsächlich in Ebenen (P) ausgerichtet sind, die senkrecht zu einer Längsachse (5) des Werkzeugschafts (1) verlaufen, wird an einem zylindrischen Werkzeugschaft (2) aus Wolframkarbid durch Löten gemäß folgenden Angaben angebracht:
- die Verbindungsstelle ist eine nicht unterbrochene ebene Fläche,
- das verwendete Harlot wird zu einem Band mit einer Dicke von etwa 0,05 mm ausgeformt, das etwa 63 Gewichtsprozent Silber, 35,25 Gewichtsprozent Kupfer, 1,75 Gewichtsprozent Titan enthält, wobei das eigentliche Löten unter Vakuum bei 800°C während etwa 15 Minuten erfolgt,
b) zur Ausformung der Schneidkanten des Werkzeugs und der zugehörigen Werkzeugflächen werden der Bearbeitungskopf (2) und der Endbereich des Werkzeugschafts (1) gemeinsam bearbeitet.

## Claims

1. Method for producing a milling cutter comprising a tool body which is separate from the machining head, characterised in that it comprises the following steps:
a) a cylindrical end part intended to constitute the machining head (2), made of a composite ceramic material, comprising a matrix (7) and filamentary reinforcing elements (6) having orientations which are mainly contained in planes (P) perpendicular to a longitudinal axis (5) which the tool body (1) comprises, is attached to a cylindrical tool body (1) made of tungsten carbide by brazing in accordance with the following points:
- the join is a flat uninterrupted surface,
- the brazing alloy used is made in a strip of approximately 0.05 mm thickness, comprising percentages by weight of approximately 63% silver; 35.25% copper, 1.75% titanium, and the brazing proper is performed under vacuum, at 880°C for approximately 15 minutes;
b) the machining head (2) and the end of the tool body (1) are machined together in order to trim the cutting edges of the tool and the associated tool surfaces.
